# FASCICULE DE BREVET EUROPEEN

(11) **EP 1 817 156 B1**
(45) Date de publication et mention de la délivrance du brevet: **24.09.2008**
(21) Numéro de dépôt: 05824053.2
(22) Date de dépôt: 02.12.2005
(51) Int. Cl.: B29C 70/38, B29C 35/02

(54) **DISPOSITIF DE DRAPAGE DE BANDES SOUPLES PRE-IMPREGNEES**
VORRICHTUNG ZUR FALTENWURFBILDUNG VON VORIMPRÄGNIERTEN FLEXIBLEN BÄNDERN
DEVICE FOR THE DRAPE FORMING OF PRE-IMPREGNATED FLEXIBLE BANDS

(30) Priorité: 02.12.2004 FR 0452843
(43) Date de publication de la demande: 15.08.2007
(73) Titulaire: European Aeronautic Defence and Space Company EADS France, 75781 Paris Cedex 16 (FR); Dassault Aviation, 95100 Argenteuil (FR); EUROCOPTER, 13725 Marignane Cédex (FR)
(72) Inventeur: SOCCARD, Eric, F-44470 Carquefou (FR)
(74) Mandataire: Poulin, Gérard
(86) Numéro de dépôt international: PCT/FR2005/051031
(87) Numéro de publication internationale: WO 2006/059051

(56) Documents cités:
- DE-A1- 3 743 485
- FR-A- 2 692 520
- FR-A- 2 785 623
- US-A- 4 569 716
- US-A- 4 882 007
- US-A- 5 176 785
- US-B1- 6 451 152

## Description

Le sujet de cette invention est un dispositif de drapage de bandes souples pré-imprégnées conformément à la revendication 1.

L'invention a pour objet la fabrication de pièces composites de formes complexes et quelconques nécessitant un fort apport de chaleur en utilisant un mode de chauffage à l'aide d'une source d'énergie dirigée vers une bande pré-imprégnée, et où un moyen d'application de pression composé de rouleaux assure la mise en forme de la bande sur son support.

Les structures composites constituées de renforts en fibres longues et d'une matrice en polymère sont généralement fabriquées avec des bandes de pré-imprégnés superposées et drapées dans des directions adéquates manuellement ou automatiquement. Les pré-imprégnés subissent un cycle de transformation finale de durcissement appelée polymérisation pour les résines thermodurcissables et consolidation pour les résines thermoplastiques. Afin de diminuer les cycles et coûts de mise en oeuvre, on cherche à réduire les étapes de fabrication des pièces. Il est ainsi possible de fabriquer en une seule fois la structure en déposant et en durcissant en même temps le pré-imprégné. Les têtes de dépose actuelles utilisent l'association d'un système de déroulement et de guidage de la matière, un système de découpe, un système de chauffage pour accomplir le durcissement et un système d'application de pression de compactage pour assurer le drapage du pré-imprégné sur le support. Certains exemples sont décrits dans les brevets US 6 451 152 B1, 6 390 169 B1, et EP 1 334 819 A1. Le document FR-A-2 692 520 décrit quant à lui un dispositif à rouleaux souples sans association à un quelconque moyen de chauffage.

On s'intéresse ici particulièrement au système de chauffage et à celui d'application de pression. Des systèmes de chauffage connus comprennent des moyens de soufflage d'air pulsé chaud ou d'azote qui ont les inconvénients d'oxyder les résines et de conduire à une mauvaise adhérence des plis de la structure. La zone de chauffage est large et s'étend jusqu'au rouleau d'application de pression, ce qui oblige à utiliser un rouleau métallique résistant à l'échauffement, quoique de tels rouleaux rigides conviennent mal à des formes complexes de courbure variable. Le dispositif environnant est exposé à diverses pollutions thermiques (dégradation de matériaux, etc.). Les sources de chaleur sont peu reproductibles et l'environnement extérieur influe : il est difficile d'assurer la régularité et l'uniformité du chauffage. Le document US-A-4 569 713 un dispositif d'application de bandes souples pré-imprégnées où les rouleaux sont rigides et le moyen de chauffage consiste en une lampe. Le préambule de la première revendication est fondé sur ce document.

D'autres systèmes de chauffage comprennent des lasers ou des diodes donnant un chauffage plus précis et mieux concentré ; mais les inconvénients précédents subsistent puisque le faisceau d'énergie est dirigé sensiblement vers le rouleau, afin de produire l'échauffement et le durcissement là où le pré-imprégné est pressé sur le support, et que le rouleau est donc fortement chauffé. Un exemple est décrit dans le document US-B1-6 451 152. De plus, le faisceau est en général dirigé obliquement pour atteindre le pré-imprégné sous le rouleau. On observe alors que la position de la zone d'échappement dépend de la courbure du support et que les conditions de chauffage ne sont donc pas constantes le long du pré-imprégné.

Avec l'invention, on cherche à améliorer la qualité des pièces et y réduire les cycles et coûts de transformation associés de la matière. Les problèmes actuellement rencontrés sont résolus, la dépose d'une bande souple de pré-imprégné de largeur quelconque sur des formes complexes peut être complètement automatisée, et l'application de pression est rendue uniforme automatiquement.

La source d'énergie utilisée pourra être optique et consiste en un laser de type YAG ou une batterie de diodes, et le faisceau énergétique sera, conformément à l'invention, orienté sensiblement perpendiculairement à la matière à déposer. De plus, il passera entre deux rouleaux. L'incidence perpendiculaire du faisceau lumineux garantit l'uniformité et la constance de la densité d'énergie apportée.

Le durcissement de la bande et son intégration au stratifié déjà posé, s'il existe, s'effectuent par conduction thermique dans son épaisseur de l'énergie surfacique apportée par la source énergétique. Le caractère local de l'apport de chaleur présente l'avantage d'éliminer tous les problèmes de pollution thermique et d'échauffement excessif du dispositif et des rouleaux d'application de pression.

Le faisceau optique sera adapté à la largeur de la bande de la matière à déposer et pourra être transformé grâce à un jeu de lentilles divergentes et convergentes donnant une tache focalisée ou non. Un jeu variable de diodes ou un système de balayage galvanométrique du faisceau permettra aussi d'ajuster la largeur de la bande. On s'efforcera de garantir la constance et l'uniformité de la densité d'énergie appliquée sur la bande à déposer. Un masque pourra aussi être introduit avec l'effet de neutraliser les perturbations latérales du signal optique produites par le laser lui-même ou par sa transformation optique.

D'une façon générale, l'utilisation de moyens donnant une distribution de chauffage plus large en direction transversale qu'en direction longitudinale d'alignement des rouleaux, ou même seulement la distribution étroite en direction longitudinale, comme un rayon de laser ou une diode, une rangée de rayons de laser ou de diodes, un masque, un dispositif de balayage, etc. permet d'employer plus facilement des rouleaux déformables dans ce procédé où le chauffage est concomitant à l'application de pression, puisque l'échauffement tout en étant suffisant pour assurer la polymérisation, reste modéré sous les rouleaux, qu'il est impossible de construire en une matière aussi résistante que des rouleaux rigides. Les rouleaux peuvent donc être disposés à un écartement assez faible pour bien remplir leur fonction de mise en forme de la bande.

La densité d'énergie surfacique pourra aussi être contrôlée par un pyromètre réglé sur l'émissivité du polymère et régulée par un algorithme de type PID.

Un jet d'azote pourra être projeté constamment à la surface de la matière touchée par le faisceau à l'aide d'une buse de largeur et d'ouverture définies et d'un débit adapté afin de rendre le milieu ambiant d'impact du faisceau optique anaérobie. L'oxydation des polymères est donc éliminée.

Un autre aspect primordial de l'invention concerne le système d'application de pression. Il comportera deux rouleaux déformables qui permettront d'assurer une tension de bande, un placage de la bande sur le stratifié déjà déposé ou l'outillage servant de support, une mise en position sensiblement perpendiculaire de la bande par rapport au faisceau optique et l'application d'une pression isostatique à ajuster en fonction du besoin recherché. Les rouleaux de part et d'autre du faisceau énergétique permettent d'appliquer une pression uniforme sur une superficie importante de la bande de pré-imprégné, notamment entre eux, là où tombe le faisceau, tout en étant disposés sans inconvénient plus loin du faisceau que dans les conceptions ordinaires. Ils sont donc soumis à un échauffement moindre qui permet de les élaborer en une matière déformable comme un élastomère. Ils s'adaptent alors aux variations locales de courbure de l'outillage de dépose, sans que l'uniformité de la pression qu'ils appliquent soit compromise.

Pour résumer, l'invention concerne sous sa forme la plus générale un dispositif de drapage de bandes souples pré-imprégnées de résine conformément à la revendication 1.

L'invention sera maintenant décrite en liaison aux figures :
- la figure 1 est une vue générale d'une réalisation de l'invention, de côté,
- la figure 2 est une vue de face de la réalisation de la figure 1,
- et les figures 3, 4 et 5 illustrent certains modes de réalisation de l'invention.

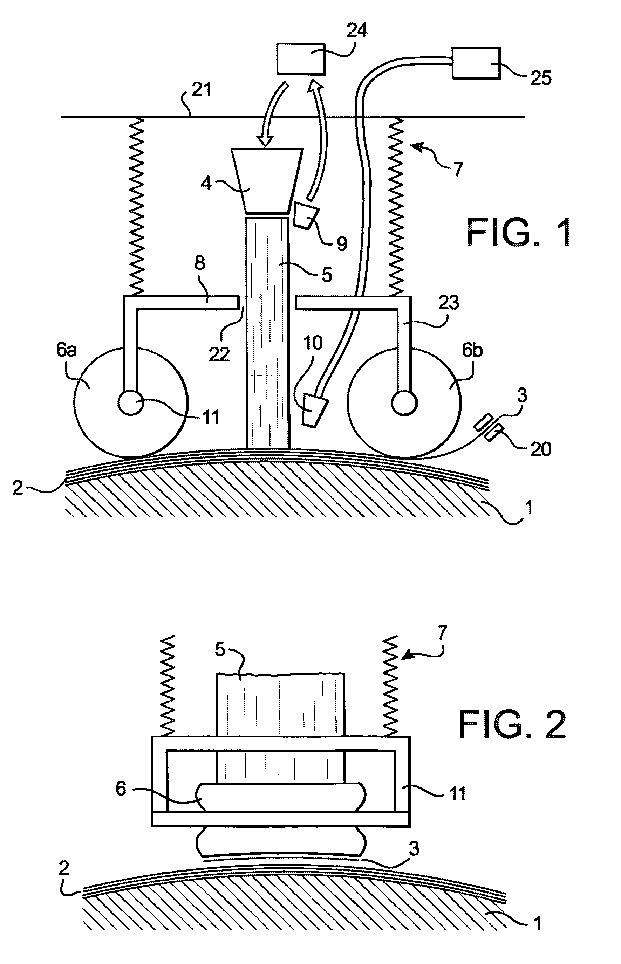

La description porte d'abord sur la figure 1. Un outillage 1 de dépose, c'est-à-dire un support de la pièce à réaliser et lui conférant sa forme, est disposé. Un composite 2 ou pré-imprégné stratifié a déjà été déposé sur sa surface. Une bande 3 souple de pré-imprégné à déposer ou à consolider est avancée sur le composite 2 au moyen d'un système de déroulement 20 d'un genre connu. Une source 4 d'énergie lumineuse est dirigée vers une section de la bande 3 à déposer. La source 4 peut être un laser de type YAG ou des diodes. Le faisceau qu'elle émet porte la référence 5 ; il est dirigé sensiblement perpendiculairement à la bande 3 à l'endroit où il l'atteint.

Une paire de rouleaux 6a et 6b est disposée en avant et en arrière du faisceau 5 en considérant une direction d'avance du dispositif sur l'outillage 1 (à droite sur la figure 1). Les rouleaux 6a et 6b d'axes parallèles rigides sont en élastomère déformable et s'adaptent donc aux variations locales de courbure de l'outillage 1, notamment en direction transversale, ainsi que la figure 2 l'illustre ; une pression uniforme est maintenue à l'entour des rouleaux 6a et 6b et entre eux sur une superficie assez grande de la bande 3. Un système de poussée 7 sur les rouleaux 6a et 6b est prévu ; il pourrait consister en des ressorts comprimés entre une platine 21 supérieure et un support des rouleaux 6a et 6b, qui peut être composé d'un masque 8 pourvu d'une ouverture 22 de délimitation de la section du faisceau 5 et de barrettes 23 unies au masque 8 et soutenant des axes 11 rigides des rouleaux 6a et 6b. Le dispositif comprend encore ici un moyen de contrôle 9 à pyromètre associé à un moyen de régulation 24 de la source 4 d'énergie optique, par exemple par un algorithme d'asservissement PID. Il comprend encore un système de propulsion d'un jet d'azote tel qu'une buse 10 reliée à un réservoir 25 et placée entre les rouleaux 6a et 6b. Tous ces éléments, sauf éventuellement le réservoir 25 et le système de régulation 24, sont reliés entre eux ou à la platine 21 et déplacés en commun sur l'outillage 1 par un moyen non représenté et pouvant consister en un bras de robot ou un portique mobile.

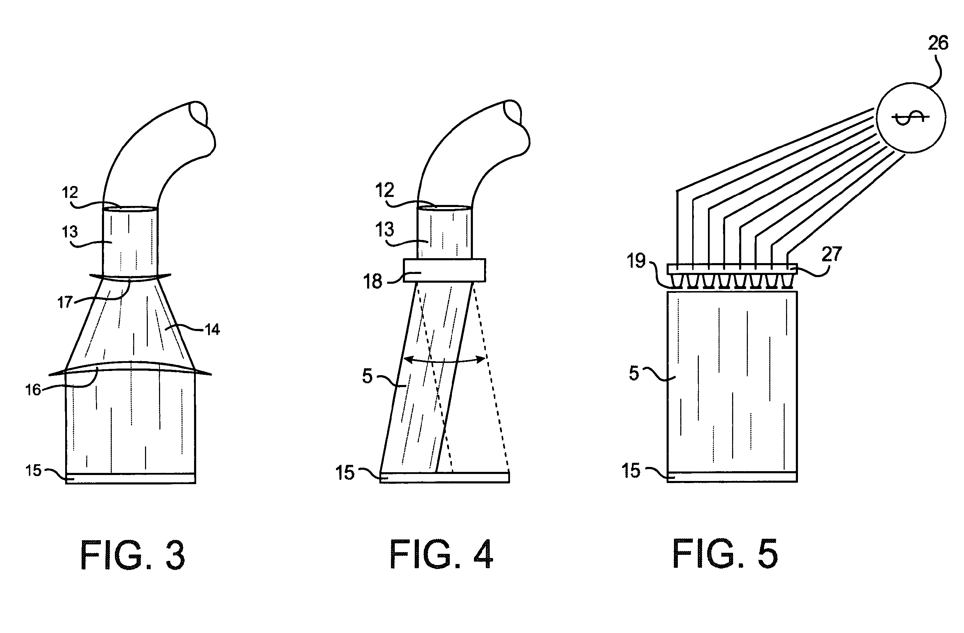

On passe maintenant à la description des figures 3, 4 et 5. Elles montrent que le faisceau 5 peut être émis de l'extrémité d'une fibre optique 12. Le faisceau porte ici la référence 13 mais n'est pas de nature différente du faisceau 5. Il peut être élargi et aminci par une paire de lentilles comprenant une lentille convergente 16 dans une direction longitudinale ou d'avance du dispositif et une lentille divergente 17 dans la direction transversale, ce qui donne un élargissement 14 du faisceau 13 suivi d'un amincissement 15 dans l'autre direction, et pour finir une tache très allongée. Au lieu de cela, on peut utiliser un système à galvanomètre de balayage 18 du faisceau optique 13, ce qu'illustre la figure 4, afin de balayer transversalement la bande 3 sur toute la largeur voulue, qu'on peut évidemment régler. D'autres agencements de lentilles peuvent être envisagés.

La figure 5 illustre un réseau de diodes 19 luminescentes toutes raccordées à une source commune 26 et dont on peut faire varier le nombre, et donc la largeur du réseau, par exemple en en collant de nouvelles sur un rail 27 solidaire de la platine 21.

Les rouleaux complètement en élastomère pourraient être remplacés par des rouleaux de même dimension comprenant un noyau central dur, métallique par exemple, et seulement une bande périphérique souple.

## Revendications

1. Dispositif de drapage de bandes (3) souples pré-imprégnées de résine, comprenant un moyen de chauffage de la bande et un moyen d'application de pression de la bande,
où le moyen d'application de pression comprend deux rouleaux (6a, 6b) d'axes parallèles appliqués successivement sur chaque portion de la bande, et le moyen de chauffage (4) est disposé entre les rouleaux et apte à délivrer un rayonnement thermique sensiblement perpendiculaire à la bande entre les rouleaux, **caractérisé en ce que** le moyen de chauffage comprend un laser, ou une rangée de diodes (19), et **en ce que** les rouleaux ont une surface en matière élastique.

2. Dispositif de drapage selon la revendication 1, **caractérisé en ce qu'**il comprend un masque (8) disposé au-dessus des rouleaux (6a, 6b) et au-dessous du moyen de chauffage (4) et pourvu d'une ouverture (22) de délimitation de section du rayonnement.

3. Dispositif de drapage selon la revendication 1, **caractérisé en ce qu'**il comprend au moins une lentille d'ajustement (16, 17) de dimension du faisceau thermique.

4. Dispositif de drapage selon l'une quelconque des revendications 1 à 3, **caractérisé en ce que** les rouleaux comprennent un noyau métallique entouré d'une bande en élastomère.

5. Dispositif de drapage selon l'une quelconque des revendications précédentes, **caractérisé en ce qu'**il comprend un système (9, 24) d'ajustement asservi de puissance du moyen de chauffage.

6. Dispositif de drapage selon l'une quelconque des revendications précédentes, **caractérisé en ce qu'**il comprend un dispositif de balayage (18) d'un faisceau produit par un moyen de chauffage dans une direction transversale à une direction d'avance des rouleaux (6a, 6b).

7. Dispositif de drapage selon l'une quelconque des revendications précédentes, **caractérisé en ce qu'**il comprend un moyen élastique (7) de poussée sur les rouleaux vers un outillage (1) de support de la bande.

8. Dispositif de drapage selon l'une quelconque des revendications précédentes, **caractérisé en ce qu'**il comprend un moyen de soufflage de gaz sur la bande entre les rouleaux.

## Claims

1. Device for stretch-forming flexible bands (3) preimpregnated with resin, including means for heating the band and means for applying pressure on the band,
wherein the means for applying pressure include two rollers (6a, 6b) with parallel shafts applied successively on each portion of the band, and the heating means (4) are arranged between the rollers and are capable of providing thermal radiation substantially perpendicular to the band between the rollers, **characterised in that** the heating means include a laser, or a diode array (19), and **in that** the rollers have a surface made of elastic material.

2. Stretch-forming device according to claim 1, **characterised in that** it includes a mask (8) arranged above the rollers (6a, 6b) and below the heating means (4) and provided with an opening (22) for delimiting the cross-section of the radiation.

3. Stretch-forming device according to claim 1, **characterised in that** it includes at least one lens (16, 17) for adjusting the size of the thermal beam.

4. Stretch-forming device according to either one of claims 1 to 3, **characterised in that** the rollers include a metallic core surrounded by an elastomer band.

5. Stretch-forming device according to any one of the previous claims, **characterised in that** it includes a system (9, 24) for servo adjustment of the power of the heating means.

6. Stretch-forming device according to any one of the previous claims, **characterised in that** it includes a device (18) for scanning a beam produced by heating means in a transverse direction with respect to a forward direction of the rollers (6a, 6b).

7. Stretch-forming device according to any one of the previous claims, **characterised in that** it includes elastic means (7) for pushing the rollers toward equipment (1) for supporting the band.

8. Stretch-forming device according to any one of the previous claims, **characterised in that** it includes means for blowing gas on the band between the rollers.

## Patentansprüche

1. Vorrichtung zum Drapieren von elastischen, vorimprägnierten Bändern (3) aus Harz, umfassend ein Heizmittel des Bandes und ein Druckbeaufschlagungsmittel des Bandes,
wobei das Druckbeaufschlagungsmittel zwei Rollen (6a,6b) mit parallelen Achsen umfasst, die nacheinander an jeden Abschnitt des Bandes angelegt werden, und das Heizmittel (4) zwischen den Rollen angeordnet ist und eine thermische Strahlung im wesentlichen senkrecht zu dem Band zwischen den Rollen abgeben kann,
**dadurch gekennzeichnet, dass** das Heizmittel einen Laser oder eine Diodenreihe (19) umfasst, und dass die Rollen eine Oberfläche aus elastischem Material haben.

2. Drapiervorrichtung nach Anspruch 1, **dadurch gekennzeichnet, dass** sie eine Maske (8) umfasst, die über den Rollen (6a,6b) und unter dem Heizmittel (4) angeordnet und mit einer Öffnung (22) zur Begrenzung des Strahlungsabschnitts versehen ist.

3. Drapiervorrichtung nach Anspruch 1, **dadurch gekennzeichnet, dass** sie mindestens eine Linse (16,17) zur Anpassung der Dimension des thermischen Strahls aufweist.

4. Drapiervorrichtung nach einem der Ansprüche 1 bis 3, **dadurch gekennzeichnet, dass** die Rollen einen Metallkern aufweisen, der von einem elastomeren Band umgeben ist.

5. Drapiervorrichtung nach einem der vorangehenden Ansprüche, **dadurch gekennzeichnet, dass** sie ein Anpassungssystem (9,24) aufweist, das vom Heizmittel mit Energie versorgt wird.

6. Drapiervorrichtung nach einem der vorangehenden Ansprüche, **dadurch gekennzeichnet, dass** sie eine Abtastvorrichtung (18) eines Strahls umfasst, der durch ein Heizmittel in einer Richtung quer zu einer Vorwärtsbewegungsrichtung der Rollen (6a,6b) erzeugt wird.

7. Drapiervorrichtung nach einem der vorangehenden Ansprüche, **dadurch gekennzeichnet, dass** sie ein elastisches Mittel (7) aufweist, das die Rollen zu einer Halterungseinrichtung (1) des Bandes hin drückt bzw. vorbelastet.

8. Drapiervorrichtung nach einem der vorangehenden Ansprüche, **dadurch gekennzeichnet, dass** sie ein Mittel zum Blasen von Gas auf das Band zwischen den Rollen aufweist.
